(19)

**Europäisches Patentamt**
**European Patent Office**
**Office européen des brevets**

(11) **EP 2 870 450 B1**

(12) **EUROPEAN PATENT SPECIFICATION**

(45) Date of publication and mention
of the grant of the patent:
**06.03.2019 Bulletin 2019/10**

(51) Int Cl.:
***G01M 5/00*** *(2006.01)*     ***G01M 7/00*** *(2006.01)*

(21) Application number: **13737190.2**

(86) International application number:
**PCT/EP2013/064225**

(22) Date of filing: **05.07.2013**

(87) International publication number:
**WO 2014/006176 (09.01.2014 Gazette 2014/02)**

(54) **METHOD FOR DETERMINING MODAL PARAMETERS**

VERFAHREN ZUR BESTIMMUNG VON MODALPARAMETERN

PROCÉDÉ POUR DÉTERMINER DES PARAMÈTRES MODAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2012 EP 12175075**

(43) Date of publication of application:
**13.05.2015 Bulletin 2015/20**

(73) Proprietor: **Vrije Universiteit Brussel
1050 Brussel (BE)**

(72) Inventors:
 • **GUILLAUME, Patrick**
  **B-1540 Herne (BE)**
 • **DEVRIENDT, Christof**
  **B-1000 Brussel (BE)**
 • **DE SITTER, Gert**
  **B-1180 Ukkel (BE)**
 • **WEIJTJENS, Wout**
  **B-3500 Hasselt (BE)**

(74) Representative: **Van Bladel, Marc
DenK iP bvba
Hundelgemsesteenweg 1116
9820 Merelbeke (BE)**

(56) References cited:
**EP-A1- 2 390 644     WO-A1-01/33182**

WO-A1-2008/002310     WO-A2-2012/061431
US-A- 5 327 358

 • **MAHMOUD EL-KAFAFY ET AL: "Direct calculation of modal parameters from matrix orthogonal polynomials", MECHANICAL SYSTEMS AND SIGNAL PROCESSING, LONDON, GB, vol. 25, no. 7, 11 April 2011 (2011-04-11) , pages 2375-2387, XP028097752, ISSN: 0888-3270, DOI: 10.1016/J.YMSSP.2011.04.006 [retrieved on 2011-04-21]**
 • **ELIZALDE H ET AL: "Semi-analytical derivation of approximate non-linear eigenvalues and eigenvectors for general non-linear MDOF systems", MECHANICAL SYSTEMS AND SIGNAL PROCESSING, LONDON, GB, vol. 23, no. 1, 1 January 2009 (2009-01-01), pages 87-103, XP025561241, ISSN: 0888-3270, DOI: 10.1016/J.YMSSP.2007.10.001 [retrieved on 2007-10-17]**
 • **LARDIES J ET AL: "A new method for model order selection and modal parameter estimation in time domain", JOURNAL OF SOUND & VIBRATION, LONDON, GB, vol. 245, no. 2, 9 August 2001 (2001-08-09), pages 187-203, XP002531053, ISSN: 0022-460X, DOI: 10.1006/JSVI.2000.3593**
 • **PEETERS B ET AL: "Evaluation of structural damage by dynamic system identification", INTERNET CITATION, 1 January 1996 (1996-01-01), pages 1-14, XP002531052, Retrieved from the Internet: URL:http://www.kuleuven.be/bwm/papers/peet ip96.pdf [retrieved on 2009-06-08]**

EP 2 870 450 B1

**Description**

**Field of the invention**

The present invention is related to the field of modal analysis of mechanical structures.

**Background of the invention**

In the last two decades modal analysis has become a key technology in structural dynamics analysis. Experimental modal testing has become a commonly used technique for studying the behaviour of mechanical and civil structures such as cars, aircrafts, bridges, offshore platforms and industrial machinery. Experimental modal analysis (EMA) identifies a modal model from the measured forces (or any other input) applied to the test system and the measured vibration responses. However, it is not always possible to measure these inputs or apply these inputs yourself, especially when the system of interest is in operation. These operating systems are in general excited by external forces such as the wind, waves, tire-road interaction or any other form of input. Therefore system identification techniques have been developed to identify the modal model from the structure under its operational conditions using output-only data. These techniques, referred to as operational modal analysis (OMA) or output-only modal analysis, take advantage of the ambient excitation due to e.g. traffic and wind. The OMA approach uses the system responses to the unknown inputs to retrieve the modal parameters (i.e. the system poles and mode shapes). An important advantage of OMA is that the system can remain in its normal operating condition. Further it is possible to combine the fields of EMA and OMA in what is called OMAX.

Popular OMA techniques are known e.g. from patent EP1250579 and from the paper 'Reference-based stochastic subspace identification for output-only modal analysis' (B. Peeters et al, Mechanical Systems and Signal Processing, 13(6):855 - 878, 1999). However, these methods are in general derived from existing experimental modal analysis techniques and therefore require some sort of knowledge of what is exciting the structure. The general assumption is that the inputs are broad spectrum white noise. The white noise assumption is in general acceptable for loads like wind and traffic (in a small frequency range). However, in the presence of rotating components this white noise assumption is severely violated. Classic examples, where rotating components occur, are wind turbines, hydro-electrical dams, rotating machinery, vehicles,... There are some remedies available to alleviate the issue of the colored (i.e. non-white) input. They in general identify the coloring by measuring additional data (for instance rotational speed) or by applying statisticals tools. These techniques then try to remove the "spoiled" data by averaging, filtering or cutting out these data points, possibly losing valuable data. Moreover it is not always possible to do this, especially when the data to-be-removed is near the system poles. Other techniques try to incorporate the harmonic (or coloring) into the used system model, be it starting from a known rotational speed or by modelling a varying harmonic. However, although these methods show some potential, they are never independent of the input's spectral content. Any deviation of the input to the made assumptions introduces modelling errors.

In order to have operational modal analysis without the influence of the input's spectral content the use of transmissibility functions is interesting, as these functions can become independent of the input's spectral content. Transmissibility functions are defined as the relation between output variables. However it was long thought that it was impossible to retrieve modal parameters from transmissibility functions.

Recent research has proven the possibility of determining modal parameters using transmissibility functions. This started with the observation that multiple instances of a scalar (a.k.a. local) transmissibility function (i.e. a function obtained by taking the ratio between two single signals corresponding to different output degrees of freedom), measured under different loading conditions, intersect at the poles of a system. This knowledge allows determining modal parameters in a way that benefits from the transmissibility function properties. The localisation of the intersections indeed brings forth the system poles and the associated mode shapes. More precisely, it becomes feasible to perform near deterministic operational modal analysis, without any prior knowledge considering the input spectrum and in which a method is considered deterministic when it becomes input-spectrum independent. It is this property that turned the spotlight on transmissibility based modal analysis (TOMA) techniques.

However, it is known that these scalar transmissibility functions, although still applicable, lose their input spectrum independent properties when multiple (not fully correlated) forces excite the structure. To resolve this problem multivariable transmissibility functions need to be introduced, i.e. a matrix expressing the relation between various sets (e.g. vectors) of output variables. While these functions are deterministic even with multiple uncorrelated forces, i.e. different input sources, they did not seem to intersect at the system poles. Yet it has been shown in 'An operational modal analysis approach based on parametrically identified multivariable transmissibilities' (P. Guillaume et al., Proceedings of IOMAC, Copenhagen, 2007) that nonetheless modal parameters can be deduced using these multivariable transmissibility functions, but unfortunately in a rather complicated manner and at the cost of an increased number of required loading conditions. With different loading conditions is meant a change in conditions which result in significant changes in the (relative) participations of the investigated modes. Different loading conditions can for example be a shift in the point of application of the forces or a change in the distribution of correlated forces over the structure. This situation occurs when the wind direction changes. An increased measurement time is required to obtain the increased number of loading conditions, for example a different wind direction can serve as a new loading condition. Another example of different loading conditions can be by using a signal starting from different moments in time after an impact on the structure. While it was possible for scalar transmissibilities to determine the modal parameters based on data obtained during two different wind directions, one now has to wait for a third loading condition before the modal parameters can be obtained. This also limits the possibility to use the mulitreference method described in the above-mentioned paper when there was no access to a third loading condition.

A more mathematical background of transmissibility function based techniques is now provided. As already mentioned, until recently, it did not seem possible to use transmissibility functions for modal parameter determination. Consider for instance scalar transmissibilitiy functions, obtained by taking the ratio of two response spectra ($X_l(s)$ and $X_r(s)$). Assuming a single input $F$ located at, say, the input degree of freedom (DOF) $k,$ it is readily verified that the transmissibility function reduces to

$$T_{lr}^{k}(s) = \frac{X_l(s)}{X_r(s)} = \frac{H_{lk}(s)F_k(s)}{H_{rk}(s)F_k(s)} = \frac{N_{lk}(s)}{N_{rk}(s)} \qquad (1)$$

with $N_{lk}$ and $N_{rk}$ the numerator polynomials occurring in the transfer function models $H_{lk} = \dfrac{N_{lk}(s)}{D(s)}$ and $H_{rk} = \dfrac{N_{rk}(s)}{D(s)}.$ Note that both fractions make use of the common denominator $D(s)$, containing the system poles $\lambda_m$, which are global parameters. In equation (1) these denominators disappear by taking the ratio of the two response spectra. So, it is perfectly understandable why transmissibility functions were thought to be useless in the determination of system poles. After all the denominators, containing all information of the poles, were lost in the calculation of these functions.

While lost in a direct manner, poles can still be determined in an implicit manner. One does observe that the scalar transmissibility function (1) is dependent on the input location $k$. This dependency can be used to find the system's poles. To prove this one can make use of the modal model between input DOF $k$ and output DOF $l$

$$H_{lk}(s) = \sum_{m=1}^{N_m} \frac{\phi_{lm}L_{km}}{s - \lambda_m} + \frac{\phi_{lm}^{*}L_{km}^{*}}{s - \lambda_m^{*}} \qquad (2)$$

whereby $N_m$ denotes the number of system poles $\lambda_m$. Using the modal model it is derived that the limit value of equation (1) for the Laplace variable s converging to the system's poles, $\lambda_m$ is

$$\lim_{s \to \lambda_m} T_{lr}^{k}(s) = \frac{\phi_{lm}L_{km}}{\phi_{rm}L_{km}} = \frac{\phi_{lm}}{\phi_{rm}} \qquad (3)$$

and this is again independent of the (unknown) input and its input location k. This illustrates the fact that all scalar transmissibility functions become independent of the location of an applied input only in the system poles. As a consequence scalar transmissibility functions, obtained under different loading conditions, intersect at the system's poles. Hence, localization of these intersections yields the system's poles, in which the system poles contain the natural frequencies and damping ratios.

Unfortunately one of the advantages of using transmissibility functions is lost when scalar transmissibilities are used in the presence of multiple dominant not-fully correlated inputs. Equation (1) adapted for multiple ($N_i$) inputs interacting with the system is given by:

$$T_{lr}^{k}(s) = \frac{X_l(s)}{X_r(s)} = \frac{\sum_{k=1}^{N_i} H_{lk}(s)F_k(s)}{\sum_{k=1}^{N_i} H_{rk}(s)F_k(s)} \qquad (4)$$

This equation clearly shows that the scalar transmissibility functions are no longer completely independent of the input's spectral content (due to the presence of $F_k(s)$), and hence, in general, no longer deterministic.

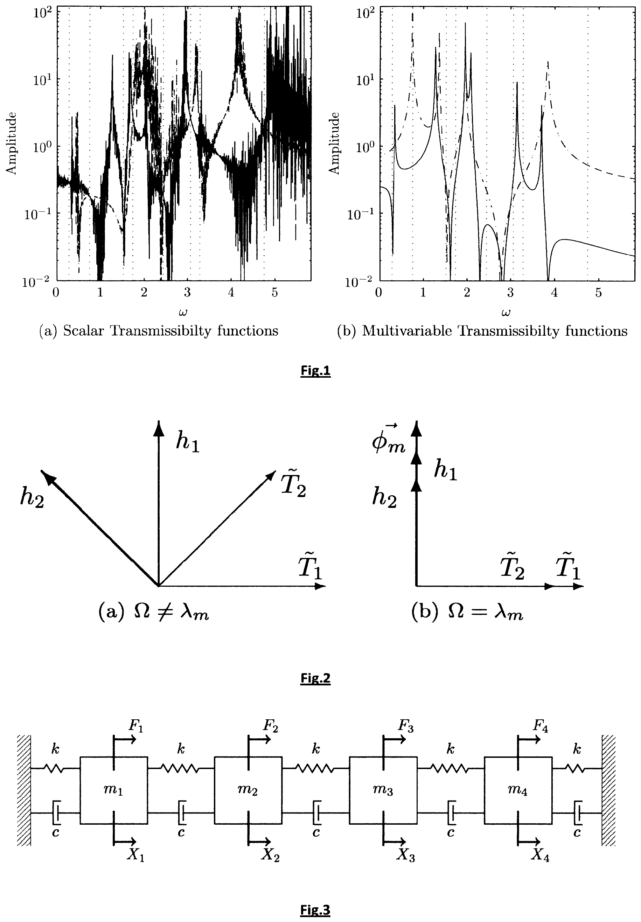

The significance of the loss of deterministic behaviour is visualized in Fig.1a. Nonetheless the scalar transmissibilities still intersect in the system's poles and it is therefore still possible to use so called base functions, i.e. user built functions using different instances of transmissibility functions as building blocks designed to have poles in the system poles, like frequency response functions, e.g. $\Delta^{-1}T_{lr}(s)=(T_{lr}^1(s)-T_{lr}^2(s))^{-1}$. Frequency domain estimators are used in order to obtain the system's poles from these base functions, but at decreased quality and in need of a larger amount of data to allow averaging.

The only way to circumvent this spectral dependency and to regain the initial high quality, is by expanding the transmissibility function to its multivariable form. The multivariable transmissibility function can be defined as follows:

$$\{X_l(s)\} = [T_{lr}(s)]_k \{X_r(s)\} \qquad (5)$$

where $\{X_r(s)\}$ is the complex reference response vector of size $N_r x1$ (with $N_r$ denoting the number of reference responses), and $\{X_l(s)\}$ the complex non-reference response vector of size $(N_o-N_r)x1$, with $N_o$ the number of obtained output signals. The decision on which responses to use as reference lies completely with the analyst and can influence the quality of the results significantly.

It can be shown that the matrix $[T(s)]$ is given as

$$[T_{lr}(s)]_k = [H_{lk}(s)][H_{rk}(s)]^{-1} \qquad (6)$$

with $[H_{lk}(s)]$ the complex transfer matrix of size $(N_o-N_r) \times N_i$ describing the dynamic behaviour between the $N_i$ input locations and the non-reference outputs, while $[H_{rk}(s)]$ is the complex transfer matrix of size $N_r \times N_i$ between the input locations and the reference outputs. In order to ensure the existence of $[H_{rk}(s)]^{-1}$ it is necessary that $N_r = N_i$. If $N_r \neq N_i$ equation (6) can still be approximated using a so-called pseudo-inverse of $[H_{rk}(s)]$.

One can clearly recognize that the multivariable transmissibility function is independent of the spectral content of the inputs, yet still dependent on its input locations $k$. Nevertheless, unlike scalar transmissibilities, multivariable transmissibility functions do no longer intersect in the system's poles (see for instance Fig. 1b) and, thus, a different approach is needed to deduce the system's poles. In the above-mentioned paper by Guillaume one way to resolve this is proposed, yet this method requires an increased number of loading conditions to retrieve the system's poles.

As already mentioned, when sufficient references are selected the multi-reference transmissibility functions again become deterministic, or input-spectrum independent. In the paper by Guillaume on multivariable transmissibility based modal analysis, [T(s)] is estimated in a parametric way. The obtained [T(s)] is then used to create pseudo-transmissibility functions, which are put in a base function. This base function, designed to have similar properties as Frequency Response Functions (FRFs), is fed into a parametric estimator for frequency response functions and the modal parameters are obtained which describe the inherent dynamic properties of the system or structure under investigation. While effective, one should note that this technique requires at least three different loading conditions and the selection of reference signals.

Often the modal parameters of a system under test are estimated at regular time intervals. These estimates allow investigating the behaviour of the system under test over large periods of time. The modal parameter estimation in such a series of analysis can therefore make use of a considerable amount of prior knowledge, for instance the results of a previous analysis. Prior knowledge can also be obtained from a numerical model of the system under test or from any assumption made from experience of the analyst. Any prior knowledge can be used to discriminate between physical and erroneous results, but can also be included into the modal parameter estimation itself to improve its performance.

More recently a new approach has been introduced in 'Operational Modal Parameter Identification from Power Spectrum Density Transmissibility' (W.J. Yan et al., Computer-Aided Civil and Infrastructure Engineering, 27(3), pp.202-217, March 2012) that operates the use of so called power spectral density transmissibility functions in a single loading condition. Although possible, this method yields limited advantages compared to classical OMA techniques as it requires conditions similar to the white noise assumption and yields erroneous modal parameters in the presence of dominant harmonic sources of excitation. Moreover the technique presented in the paper by Yan et al. is based on scalar transmissibility functions and can therefore not benefit from the advantages of the multivariable transmissibility functions.

Application WO2008/002310 is concerned with modal parameter estimation. The proposed approach is mainly focussed on experimental modal analysis, wherein, as already mentioned before, outputs as well as inputs are measured. Hence, the user is in control of the signals being applied. It is stated that when some or all of the excitation inputs are not measured, the system is still able to estimate modal parameters. This implies that the proposed method is also applicable in operational settings. Unknown excitations are considered as noise. The influence of an unknown harmonic force results in a computational pole that can be reduced by filtering. However, like other techniques this approach has difficulties when little to nothing is known about the input spectrum or when the input harmonic is close to the system pole itself.

EP2390644 proposes a method for the identification and determination of loads by inverse analysis. The application does not provide any information on how to determine the modal parameters.

Patent US5327358 is concerned with the detection of damages in a structure. Modal parameters before and after damage are used to quantify the damage level. The modal parameters are assumed to be known.

Application WO2012/061431 is aimed at the identification of the impact load on a monitored structure. It applies an existing method for modal parameter estimation. The solution is similar to other existing techniques in modal analysis, but does not rely on output-only data.

Consequently, there is a need for a method for determining modal parameters of a system under test from response measurements, that is less cumbersome and more generally applicable than the prior art solutions described above.

**Summary of the invention**

It is an object of embodiments of the present invention to provide for a method for determining modal parameters of a system under test that is based on response measurements, little user interaction, allows for a reduced testing time and does not require any knowledge of the input's spectral content.

The above objective is accomplished by the present invention by a method according to claim 1.

In a first aspect the invention relates to a method for determining modal parameters of a system under test by using only output signals. The method comprises the steps of

- taking a first set of values of at least three output signals obtained under a first loading condition of the system,
- determining for that first loading condition a parametric matrix model for the system, said parametric matrix model representing a space orthogonal to the space spanned by the output signals, said space being at least two dimensions smaller than the number of output signals, so that the influence of input spectra is reduced,
- determining for the first loading condition parameters of the parametric matrix model,
- expressing a polynomial eigenvalue problem based on the parametric matrix model and the corresponding parameters for the first loading condition,
- deriving additional information about the system under test by considering a second set of values of the output signals obtained under a second loading condition of said system and determining for the second loading condition a parametric matrix model and its parameters, or by considering prior knowledge about characteristics of said system under test,
- adapting the polynomial eigenvalue problem using said additional information, until a complete set of equations is obtained,
- obtaining the modal parameters by solving the adapted polynomial eigenvalue problem.

The claimed method indeed allows achieving the above-mentioned aims. The proposed approach for modal analysis is matrix-based, in other words it is a multivariable solution. Basically, a first loading condition is required along with some form of additional information for determining the modal parameters, i.e. the system poles and mode shapes. The proposed approach allows an increased applicability of the method in a wider range of fields. Another benefit of the solution according to this invention is a reduction of the testing time, as there is no need to wait for e.g. a large amount of loading conditions. Further, less user interaction is needed. It should be noted that two (or more) loading conditions can be present in one measurement record.

The proposed method starts from system response data, e.g. obtained by measurement. The data comprises a first set of values of output signals obtained under a first loading condition. For this loading condition the corresponding set of values of the output signals spans a subspace. A parametric matrix model of a subspace orthogonal to that subspace of the output signals is determined and the parameters of the matrix model are estimated. A polynomial eigenvalue problem is expressed based on this parametric matrix model and the corresponding parameters for the first loading condition. Next, additional information about the system under test is derived. This can be done in various ways.

One can at this point consider a second set of values of the output signals obtained under a second loading condition of the system and determine for that second loading condition a parametric matrix model and its parameters. Alternatively, one can rely on prior knowledge about characteristics of said system under test. The additional information is exploited for adapting the polynomial eigenvalue problem. This is repeated until a complete set of equations is obtained. Then one can be sure the eigenvalue problem yields a unique solution. By solving the adapted polynomial eigenvalue problem the desired modal parameters are finally obtained.

In a preferred embodiment the parametric matrix model has a number of rows not exceeding the difference between the number of the output signals and the number of uncorrelated inputs acting on the system during loading. The inputs can be forces, pressures, moments, but also electrical quantities like voltages or currents. In general, any actuation capable of exciting a system and thus generating output signals can be employed.

In one embodiment the parametric matrix model is obtained from a matrix polynomial representation of a multivariable transmissibility function, which in essence describes the relation between output signals. The step of determining said parameters then advantageously comprises estimating coefficients of the matrix polynomials. In this embodiment the coefficients are estimated before the polynomial eigenvalue problem is derived. In such embodiment a step may be performed of selecting among the output signals a number of reference signals for the multivariable transmissibility function, said number being equal to or exceeding the number of uncorrelated inputs acting on the system during loading.

In an alternative embodiment the parametric matrix model is represented by a single matrix polynomial and the step of determining parameters comprises estimating coefficients of the single matrix polynomial. In this embodiment a direct estimation of the unknown polynomial coefficients is performed.

In an embodiment the parametric matrix model is time-varying.

Advantageously the method steps are performed iteratively in order to allow for modal parameter tracking.

In preferred embodiments of the invention the prior knowledge is derived from earlier measurements of the system under test or from numerical simulations.

In a step, not being part of the invention, of obtaining the modal parameters comprises discriminating system poles from non-physical poles. That step of discriminating advantageously comprises construction of a stabilization diagram to evaluate the numerical stability of the obtained modal parameters.

In another preferred embodiment in the step of determining (estimating) parameters a transient term is taken into account, said transient term reflecting a transient excitation and/or the influence of the system's initial and final conditions. This is especially advantageous when short datasets are used. In an advantageous embodiment this transient is used for reducing the effects of a leakage error, i.e. an error caused by the ill-modeling of the structure's initial and final conditions, and the influence of said transient excitation.

In an advantageous embodiment more than two sets of values of measured output signals are taken, obtained under more than two different loading conditions. This might reduce the error upon the results obtained when very similar loading conditions were used.

In one embodiment the method starts with actually measuring the output signals with vibrational sensors. If necessary, the data is processed (for example : averaged, filtered, ...) as is common practice in the fields of application of the proposed method.

The invention relates to a program, executable on a programmable device containing instructions according to claim 14, which when executed, perform the method as previously described. The invention also relates to a data carrier according to claim 15 containing such program.

The above and other aspects of the invention will be apparent from and elucidated with reference to the embodiment(s) described hereinafter.

## Brief description of the drawings

The invention will now be described further, by way of example, with reference to the accompanying drawings, wherein like reference numerals refer to like elements in the various figures, and in which:

Fig.1 illustrates the behaviour of scalar transmissibility functions (Fig.1a) and of multivariable transmissibility functions (Fig.1b).The system's poles are indicated with dotted lines.

Fig.2 illustrates the properties of $[\tilde{T}(\Omega)]$ for a ($N_0 = 2$, $N_r = 1$) system with two different loading conditions.

Fig.3 represents the 4-DOF model used in the simulations.

Fig.4 illustrates loading conditions as simulated.

Fig.5 represents a stabilisation diagram obtained for a least-squares complex frequency (LSCF) estimator on cross power data (s: numerically stable pole, f: numerically stable in frequency, d : stable in damping, o: unstable).

Fig.6 represents a stabilisation diagram obtained for the LSCF estimation on the pseudo-inverse of the scalar transmissibility matrix (s: numerically stable pole, f: numerically stable in frequency, d : stable in damping, o: unstable).

Fig.7 represents a stabilisation diagram obtained using the multireference transmissibility approach according to an embodiment of the invention (s: numerically stable pole, f: numerically stable in frequency, d : stable in damping, o: unstable).

Fig.8 represents a stabilisation diagram obtained using the reference-free approach according to an embodiment of the invention (s: numerically stable pole, f: numerically stable in frequency, d : stable in damping, o: unstable).

Fig.9 represents loading conditions as simulated in an example.

Fig.10 represents stabilisation diagrams to show the influence of leakage.

Fig.11 represents a continuous varying loading condition with two acting forces.

Fig.12 represents a cost function used to calculate the solutions of the eigenvalue problem.

**Detailed description of illustrative embodiments**

The present invention will be described with respect to particular embodiments and with reference to certain drawings but the invention is not limited thereto but only by the claims.

The methodology proposed in this invention employs a parametric approach to directly estimate the model $[T(\Omega)]$ and obtain the system's poles directly from this parametric model. One starts from information from output values derived under a first loading condition. Additional information can be derived from either one or more further loading conditions or from available prior knowledge about characteristics of the system under test. This additional information allows building an eigenvalue problem that yields a unique solution.

To correctly model the multivariable transmissibility functions it is preferable to use parametric models, like e.g. numerator-denominator models, such as for instance the left matrix fraction description (LMFD) :

$$[T(\Omega)] = [D_L(\Omega)]^{-1}[N_L(\Omega)] \qquad (7)$$

with $[D_L(\Omega)]$ the square $(N_0 - N_r)$-dimensional denominator matrix polynomial and $[N_L(\Omega)]$ the complex numerator matrix polynomial of size $(N_o-N_r) \times N_r$, which can be described as follows :

$$[D_L(\Omega_k)] = \sum_{i=0}^{n_D}[A_i]\Omega_k^i \qquad (8)$$

$$[N_L(\Omega_k)] = \sum_{i=0}^{n_N}[B_i]\Omega_k^i \qquad (9)$$

in which $[A_i$ and $[B_i]$ denote the matrices to be estimated and $n_D$, $n_N$ are the model orders defined by the user.

In the frequency domain one can choose for $\Omega_k$, the base function, e.g. polynomial base function, between a continuous-time and a discrete-time model to approximate the discrete (e.g. sampled) time signal. The models are formulated as a Laplace domain (continuous-time) model if $\Omega_k = j\omega_k$, and as a Z-domain (discrete-time) model for $\Omega_k = e^{-j\omega_k T_s}$, with $T_s$ the sampling period, but other choices are possible.

The proposed approach is not limited to the frequency domain and can also be implemented in the (discrete) time domain by using the time domain equivalences of the numerator and denominator matrix polynomials (8) and (9) :

$$[D_L(q)] = \sum_{i=0}^{n_D}[a_i]q^i \qquad (10)$$

$$[N_L(q)] = \sum_{i=0}^{n_N}[b_i]q^i \qquad (11)$$

in which $g(i)$ is the shift operator for the discrete time domain: $q^i x(uT_s) = x((u - i)T_s)$ or, for the continuous time domain, the derivative: $q^i x(t) = \dfrac{d^i x(t)}{dt}.$ Again $[a_i]$ and $[b_i]$ are the matrices to be estimated and $n_D, n_N$ the model orders defined by the user.

The estimation process to obtain $[A_i]$ and $[B_i]$ or $[a_i]$ and $[b_i]$ can be performed in a variety of ways. Various types of input-output time or frequency domain, deterministic or stochastic estimators can be applied, as known in the art. The choice of the estimation method can however influence the performance of the proposed methodology. For instance, the use of the linear least squares cost function allows for a one step determination of the matrix coefficients and a fast working implementation of the approach of the current invention. A good model choice, as is necessary in the proposed numerator-denominator model, can influence the properties of the non-physical poles and therefore ease the distinction between physical and non-physical poles. When only noisy data is available, more advanced estimators (such as Maximum Likelihood Estimator (MLE)) are to be preferred.

Once the matrix polynomial coefficients are known, the numerator and denominator matrices are combined :

$$\{\tilde{X}(\omega)\} = \begin{Bmatrix} X_l(\omega) \\ X_r(\omega) \end{Bmatrix}, [\tilde{T}(\Omega)] = \begin{bmatrix} D_L(\Omega) & -N_L(\Omega) \end{bmatrix} \qquad (12)$$

This yields the following :

$$[\tilde{T}(\Omega)]\{\tilde{X}(\omega)\} = 0 \qquad (13)$$

Algebraically speaking $[(\tilde{T}\Omega)]$ is in fact a set of (row) vectors orthogonal to the measured response and therefore a subset of what is known as the nullspace of $\{\tilde{X}(\omega)\}$. Yet, while the nullspace of $\{\tilde{X}(\omega)\}$ is stochastic (because orthogonal to the stochastic variable $\{\tilde{X}(\omega)\}$), the subset provided in $[\tilde{T}(\Omega)]$ is not, due to its origin as a transmissibility function. This behaviour can be readily shown starting from the combination of (6) and (7) :

$$[D_L(\Omega)]^{-1}[N_L(\Omega)] = [H_{lk}(\Omega)][H_{rk}(\Omega)]^{-1} \qquad (14)$$

$$[N_L(\Omega)][H_{rk}(\Omega)] = [D_L(\Omega)][H_{lk}(\Omega)] \qquad (15)$$

Further rearranging the terms in this equation yields

$$\begin{bmatrix} D_L(\Omega) & -N_L(\Omega) \end{bmatrix} \begin{bmatrix} H_{lk}(\Omega) \\ H_{rk}(\Omega) \end{bmatrix} = 0 \qquad (16)$$

Using (13) this results in one of the most important properties of $[\tilde{T}(\Omega)]$

$$[\tilde{T}(\Omega)] \begin{bmatrix} H_{lk}(\Omega) \\ H_{rk}(\Omega) \end{bmatrix} = 0 \qquad (17)$$

This means that the subset of (row) vectors in $[\tilde{T}(\Omega)]$ spans in fact the $(N_0\text{-}N_r)$-dimensional subspace orthogonal to the columns $k$ of the deterministic system's transfer matrix. Consequently, this means that $[\tilde{T}(\Omega)]$ is unaffected by the inputs' spectral content yet dependent of the input locations $k$. This is a property shared with all (multivariable) transmissibility functions thus far used in modal analysis.

To retrieve modal parameters using $[\tilde{T}(\Omega)]$ one can still rely on the properties of transmissibility functions. As set out earlier, scalar transmissibility functions depend on the loading condition's input location $k$ for all values of $\Omega$ except for the system's poles. Being scalar this means they always take the same value in the poles, and curves would intersect. To retrieve the modal parameters using $[\tilde{T}(\Omega)]$ a similar line of thought can be followed. In equation (17) it can be seen that in general $[\tilde{T}(\Omega)]$ depends on the input locations $k$. On the other hand, it is commonly known that $[H(\lambda_m)]$ is rank deficient, its column space is solely spanned by the mode shape vectors $\{\phi_m\}$. This means that in a pole the space spanned by the row vectors of $[\tilde{T}(\lambda_m)]$ falls inside the nullspace of the mode shape vector $\{\phi_m\}$ which is independent of the loading conditions.

In order to understand this property of $[\tilde{T}(\Omega)]$, Fig.2 provides an illustration for a ($N_0 = 2$, $N_r = 1$) system. There are two different loading conditions ($k = 1$ and $k = 2$). In Fig.2a $h_1$, $h_2$ (columns of $[H(s)]$) and consequently $\tilde{T}_1$, and $\tilde{T}_2$ are still dependent of the input location. In Fig.2b this dependency is lost and $T_1$ and $\tilde{T}_2$ always coincide.

Accordingly, $N_i$ sets of signals of the $N_o$ output variables of interest, obtained under $N_i$ different loading conditions (typically by measurement), can be used to perform an estimation of $[\tilde{T}(s)]_l$ for every loading condition $l$. All these transmissibility functions will be different, describing different nullspaces. In the poles all these functions are orthogonal to the corresponding mode shape vector, which can be formulated as follows:

$$[\tilde{T}(\lambda_m)]_l \{\phi_m\} = 0 \quad \forall m = 1,2,...,N_m \ and \ \forall l = 1,2,...,N_l \qquad (18)$$

So, when combining all $N_i$ different $[\tilde{T}(s)]_k$ into one complex large matrix of size $N_l(N_o-N_r) \ x \ N_o$, i.e.

$$[\Upsilon(\Omega)] \in \mathbb{C}^{N_l(N_o-N_r) \times N_o} \quad :$$

$$[\Upsilon(\lambda_m)]\{\phi_m\} = \begin{bmatrix} \tilde{T}(\lambda_m)_1 \\ \tilde{T}(\lambda_m)_2 \\ \vdots \\ \tilde{T}(\lambda_m)_{N_l} \end{bmatrix} \{\phi_m\} = \left( \sum_{i=0}^{n_{max}} \begin{bmatrix} A_{i1} \ , -B_{i1} \\ A_{i2} \ , -B_{i2} \\ \vdots \\ A_{iN_l} \ , -B_{iN_l} \end{bmatrix} \lambda_m^i \right) \{\phi_m\} = 0 \qquad (19)$$

One so obtains an expression close to a polynomial eigenvalue problem, in which $N_{max} = max\{n_D,n_N\}$ and $A_i = 0$ for $i > n_D$ and $B_i = 0$ for $i > n_N$.

While the matrix coefficients (20) might be square (when $N_l(N_o -N_r) = N_o$),

$$\begin{bmatrix} A_{i1} \ , -B_{i1} \\ A_{i2} \ , -B_{i2} \\ \vdots \\ A_{iN_l} \ , -B_{iN_l} \end{bmatrix} \qquad (20)$$

they in general are not. As the skilled person will readily appreciate, multiple methods exists to square the matrix coefficients, for instance by rejecting all rows past row number $N_o$, or by addition of fictional columns in order to have $N_l(N_o-N_r)$ columns, and these choices might influence the performance of the method.

The polynomial eigenvalue problem can be solved (e.g. by means of optimization techniques, the use of companion matrices or any other method known by people skilled in the art) and within the set of eigenvalues and eigenvectors, respectively, the system's poles ($\lambda_m$) and its mode shapes $\{\phi_m\}$ can be found.

To assure a unique solution the rank of $[\Upsilon(\Omega)]$ must be $N_0$ for all values of $\Omega \neq \lambda_m$. When $[\Upsilon(\Omega)]$ is not of full (row) rank, there is always a vector orthogonal to $[\Upsilon(\Omega)]$ even when $\Omega \neq \lambda_m$; in this case the nullspace of $[\Upsilon(\Omega)]$ indeed contains more than just the mode shapes. These vectors are also solutions to the eigenvalue problem posed in equation (19) and therefore will incorrectly be interpreted as if they were mode shapes.

In order to avoid this, one must have a complete set of loading conditions that assures the full (column) rank of $[\Upsilon(\Omega)]$. When the set is incomplete, the technique produces false results, yet this error can easily be prevented by detecting ill-conditioning of $[\Upsilon(\Omega)]$ and rejecting all results when $[\Upsilon(\Omega)]$ is rank insufficient.

An example is provided to illustrate the completeness of a set. Consider following two loading conditions:

$$\{\tilde{X}\}_1 = \dot{h}_1(\omega)F_{1,1}(\omega) + \dot{h}_2(\omega)F_{2,1}(\omega) \qquad (21)$$

$$\{\tilde{X}\}_2 = \overset{\shortmid}{h}_1(\omega)F_{1,2}(\omega) + \overset{\shortmid}{h}_3(\omega)F_{3,2}(\omega) \qquad (22)$$

In both (21) and (22) a force is applied on DOF 1. A second force shifts from DOF 2 towards DOF 3, so there are two different loading conditions. However, as a set of loading conditions it is incomplete. The reason for this can be found in the recurrence of a force at DOF 1. Indeed, $[\tilde{T}(\Omega)]_1$ is orthogonal to $\vec{h}_1$ and $\vec{h}_2$, while $[\tilde{T}(\Omega)]_2$ is orthogonal to $\vec{h}_1$ and $\vec{h}_3$. Since both matrices are orthogonal to $\vec{h}_1$, their combination remains orthogonal to $\vec{h}_1$. Therefore the condition that the nullspace of $[\Upsilon(\Omega)]$ consist solely out of the mode shapes is not met. To complete the set of loading conditions a new loading condition should be added. For instance :

$$\{\tilde{X}\}_3 = \overset{\shortmid}{h}_2(\omega)F_{2,3}(\omega) + \overset{\shortmid}{h}_3(\omega)F_{3,3}(\omega) \qquad (23)$$

Addition of this loading condition to the already existing set would resolve the issue. $[\tilde{T}(\Omega)]_3$ is no longer orthogonal to $\vec{h}_1$ and the new $[\Upsilon(\Omega)]$ is of full (column) rank. Obviously, the validation of the full (column) rank of $[\Upsilon(\Omega)]$ is essential in the demand for a reliable estimator.

As mentioned before the polynomial eigenvalue problem results in $N_l(N_o - N_r) \times n_{max}$ eigenvalues and eigenvectors, a number that may exceed the number of physical poles, $N_m$. To detect and reject these additional mathematical poles one can for example look at criteria such as excessive damping ratios (e.g. $\xi > 10\%$), unstable poles ($\xi \le 0$) and pure mathematical poles, or use the properties of the stabilization chart to discriminate between numerical and mathematical poles. Further alternatives can be envisaged as well.

Once these operations are performed and a complete set of loading conditions is used, one has effectively obtained the complete set of system poles and mode shapes in a (near) deterministic manner, while only operational data was used.

The various steps of the method for determining modal parameters according to one embodiment of the invention are now described :

- obtain the system response as in $N_o$ output signals, in which $N_o$ exceeds the number of uncorrelated inputs exciting the structure, for instance by using a set of $N_o$ vibrational sensors, of the system excited by unknown inputs,
- (optional) process the data in such a manner that the influence of measurement noise and leakage can be reduced, using commonly known methodologies,
- select the number of references ($N_r$) in such a manner that the multi-reference transmissibility functions become (near) deterministic,
- select the reference signals,
- repeat the previous steps for $N_l$ loading conditions, until a complete set of loading conditions is obtained,
- estimate for every loading condition the matrix coefficients $[A_i]$, $[B_i]$, for the user-defined model orders $n_D, n_N$, in the preferred domain, and construct the matrix $[\tilde{T}(\Omega)]_k$ for the data linked to one loading condition.
- construct the combined matrix $[\Upsilon(\Omega)]$ and solve the polynomial eigenvalue problem :

$$\left( \sum_{i=0}^{n_{max}} \begin{bmatrix} A_{i1} , -B_{i1} \\ A_{i2} , -B_{i2} \\ \vdots \\ A_{iN_l} , -B_{iN_l} \end{bmatrix} \lambda_m^i \right) \{\phi_m\} = 0 \qquad (24)$$

- the system poles and mode shapes are now found within the set of solutions of the polynomial eigenvalue problem (24)
- to discriminate between physical and non-physical poles within the set of solutions one can use commonly used criteria such as for example : excessive damping ratios (e.g. $\xi > 10\%$), unstable poles ($\xi \le 0$) and pure mathematical poles.

In addition there also exists the possibility to construct what is called a stabilization diagram to further distinguish between physical and non-physical poles. This can be done by repeating the steps of matrix coefficient estimation, matrix construction, eigenvalue problem solving and discrimination between found poles for different model orders $n_D$ and $n_N$

and evaluating the numerical stability of the obtained results over these different model orders, as is common practice within the modal analysis community.

Note that if $N_r$ exceeds the number of uncorrelated inputs, $[\tilde{T}(\Omega)]$ is still uninfluenced by the input spectrum. If $N_r$ is chosen smaller than the actual number of uncorrelated inputs a small dependence on the input spectra will remain, but the influence of the dominant inputs will be greatly reduced.

The method as described above yields promising results. However, it suffers from one major drawback common to most existing techniques. There exists no clear criterium of what is a good choice for the reference signals. To alleviate the user from this decision a reference-less approach could not only save the user a significant amount of time, but also allow for an easier automatization of the technique.

Whereas above the multivariable transmissibility function was estimated as defined by formula (5), it is also possible to directly estimate the coefficients of $[\tilde{T}(\Omega)]$ as described in equation (13). This can be done by using a single matrix polynomial. An example is given for the frequency domain :

$$[\tilde{T}(\Omega_k)] = \sum_{i=0}^{n_C} [C_i]\Omega_k^i \qquad (25)$$

wherein the $[C_i]$, the complex matrix coefficients of size $N_{rows}$ x $N_o$, are the parameters to be estimated, $n_c$ the used model order and $N_{rows}$ the preferred number of rows of matrix coefficiënts. Similar to the previous, $N_{rows}$ should be smaller than or equal to $N_o$ minus the number of uncorrelated forces acting on the system of interest during this loading condition. To estimate the coefficients $[C_i]$ one can again rely on a variety of common estimators in the Laplace, Z-, continuous time, discrete time or any other preferred domain. Again the properties of these estimation techniques differ and may result in different performance properties of the proposed method.

While at a first glance there is only a minor difference between this adapted form and the previous, the impact of this change is rather fundamental. By estimating the nullspace directly rather than constructing it from the parametric model of the mulitreference transmissibility function, according to (12), there no longer is a need to define the references. Indeed, a closer look at (13) reveals that there is no longer a discrimination between $\{X_r(\omega)\}$ and $\{X_l(\omega)\}$ and the complete response vector can be used as a whole, relieving the user of the need to define references.

To retrieve the system poles, the method as previously described can be reused with the minor alterations as illustrated below. The adapted algorithm can be described in the following steps :

- obtain the system response as in $N_o$ output signals, in which $N_o$ exceeds the number of uncorrelated inputs exciting the structure, for instance by using a set of $N_o$ vibrational sensors, of the system excited by unknown inputs,
- (optional) process the data in such a manner that the influence of measurement noise and leakage can be reduced, using the commonly known methodologies.
- select the number of rows of the matrix coefficients $[C_i]$ and estimate the matrix coefficients $[C_i]$, for the user-defined model orders $n_c$, in the preferred domain,
- repeat the previous steps for $N_l$ loading conditions, until a complete set of loading conditions is obtained,
- construct the combined matrix $[\Upsilon(\Omega)]$ and solve the polynomial eigenvalue problem :

$$\left( \sum_{i=0}^{n_c} \begin{bmatrix} C_{i1} \\ C_{i2} \\ \vdots \\ C_{iN_l} \end{bmatrix} \lambda_m^i \right) \{\phi_m\} = 0 \qquad (26)$$

- the system poles and mode shapes are now found within the set of solutions of the polynomial eigenvalue problem,
- to discriminate between physical and non-physical poles within the set of solutions one can use commonly used criteria such as for example : excessive damping ratios (e.g. $\xi > 10\%$), unstable poles ($\xi \leq 0$) and pure mathematical poles.

Again it is possible to use different model orders in a stabilization diagram as mentioned previously.

In situations wherein only short datasets are available, for instance flight flutter, road-testing, or fast-varying boundary conditions, so called leakage errors can cause an issue. In general the presented methods already have a relative good robustness against leakage errors. While preprocessing in order to reduce the leakage error is possible and common practice (for instance using the Hanning window) it would be beneficial if this preprocessing could be avoided. In this way the required amount of data can be reduced and also the error on the obtained results, since some windows introduce an error upon the estimated system poles.

For classic modal analysis there is a way to incorporate these boundary conditions by addition of a transient term to the model. This concept can be applied to extend the model given in (13) as follows :

$$[\tilde{T}(\Omega)]\{X(\omega)\} + \tau(\Omega) = 0 \qquad (27)$$

wherein $\tau(\Omega)$, the transient polynomial, can be incorporated within $\tilde{T}(\Omega)$ as follows :

$$[\tilde{T}(\Omega), \tau(\Omega)]\begin{Bmatrix} X(\omega) \\ 1 \end{Bmatrix} = [\tilde{T}(\Omega), \tau(\Omega)]\{\tilde{X}(\omega)\} = 0 \qquad (28)$$

A polynomial model can be estimated from the extended system response vector $\{\tilde{X}(\omega)\}$ using the following :

$$[\tilde{T}(\Omega_k), \tau(\Omega)] = \sum_{i=0}^{n_{\tilde{C}}} [\tilde{C}_i]\Omega_k^i \qquad (29)$$

in which the $[\tilde{C}_i]$, the complex matrix coefficients of size $N_{rows}$ x $(N_o+1)$, are the coefficients to be estimated. Since the transient effects, i.e. the cause of a leakage error, are accounted for within the last columns of the matrix coefficients $[\check{C}_i]$ one can reduce the influence of the transients by removing these columns, and hence reduce the leakage error. This allows for system identification on shorter data sets.

The adapted algorithm can then be described using the following steps :

- obtain the system response as in $N_o$ output signals, in which $N_o$ exceeds the number of uncorrelated inputs exciting the structure, for instance by using a set of $N_0$ vibrational sensors, of the system excited by unknown inputs,
- (optional) process the data in such a manner that the influence of measurement noise can be reduced, using the commonly known methodologies, and extend the response vectors as described in (28),
- select the number of rows of the matrix coefficiënts $[\check{C}_i]$ and
- estimate the matrix coefficients $[\tilde{C}_i]$, for the user-defined model order $n_c$, in the preferred domain and repeat this for every loading condition,
- remove the columns associated with the transient terms from all instances of $[\tilde{C}_i]$, in order to obtain the "leakage free" matrix coefficients $[C_i]$,
- repeat the previous steps for $N_l$ loading conditions until a complete set of loading conditions is obtained,
- construct the combined matrix $[\Upsilon(\Omega)]$ and solve the polynomial eigenvalue problem :

$$\left( \sum_{i=0}^{n_{max}} \begin{bmatrix} C_{i1} \\ C_{i2} \\ \vdots \\ C_{iN_l} \end{bmatrix} \lambda_m^i \right) \{\phi_m\} = 0 \qquad (30)$$

- the system poles and mode shapes are now found within the set of solutions of the polynomial eigenvalue problem
- to discriminate between physical and non-physical poles within the set of solutions one can use commonly used criteria such as for example : excessive damping ratios (e.g. $\xi > 10\%$), unstable poles ($\xi \leq 0$) and pure mathematical poles.

Again there exists the possibility to use different model orders in a stabilization diagram as was mentioned previously.

The method can also be applied to a measurement record in which the system-of-interest is subject to a continuously varying loading condition, e.g. in a real-life scenario in which the system is excited by forces that continuously shift direction (e.g. wind loading). The measurement record therefore contains an infinite number of loading conditions, as at each instance of time the loading condition is slightly different from the loading conditions at the preceding time instances. Each of these 'instantaneous' loading conditions can be linked to an instantaneous transmissibility function. These instantaneous transmissibility functions can also be used to solve the polynomial eigenvalue problem unique to the present method. However, to estimate these instantaneous transmissibility functions it is necessary to extend the polynomial matrix model to a time-varying form to incorporate the continuously varying loading condition.

$$[T(\Omega,t)] = [D_L(\Omega,t)]^{-1}[N_L(\Omega,t)] + [D_L(\Omega,t)]^{-1}\tau(\Omega)$$

with

$$[D_L(\Omega,t)] = \sum_{i=0}^{n_D}[A_i(t)]\Omega_k^i$$

$$[N_L(\Omega,t)] = \sum_{i=0}^{n_N}[B_i(t)]\Omega_k^i$$

with $[A_i(t)]$ and $[B_i(t)]$ modeled as polynomials of order $n_T$ in time:

$$[A_i(t_x)] = \sum_{j=0}^{n_T}[A_{i,j}^{tv}]t_x^j$$

$$[B_i(t_x)] = \sum_{j=0}^{n_T}[B_{i,j}^{tv}]t_x^j$$

Once the parameters $[A_{i,j}^{tv}]$ and $[B_{i,j}^{tv}]$ are estimated, for instance as described in the paper 'Frequency-domain weighted non-linear least-squares estimation of continuous-time, time-varying systems' (Lataire J. et al., IET Control Theory & Applications, 5(7), pp.923-933, 2011), the polynomial eigenvalue problem can be solved by using $N_I$ instantaneous transmissibility functions $[T(\Omega,t_I)]$ associated with $N_I$ time instances $t_I$. It is best practice to choose the time instances t, such that the associated instantaneous transmissibility functions $[T(\Omega,t_I)]$ differ as much as possible. Note that the user action of identifying two or more loading conditions within a single measurement record has been replaced by choosing the time instances $t_I$. These time instances can then be used in the construction of the polynomial eigenvalue problem typical for the proposed method. The instantaneous transmissibility functions share all relevant properties with the transmissibility functions used earlier and can become independent of the input spectrum.

The adapted algorithm can then be described using the following steps:

- obtain the system response to continuously varying loading conditions as in $N_o$ output signals, in which $N_o$ (preferably) exceeds the number of uncorrelated inputs exciting the structure, for instance by using a set of $N_o$ vibrational sensors, of the system excited by unknown inputs.
- select the number of references ($N_r$) in such a manner that the multi-reference transmissibility functions become (near) deterministic.
- select the reference signals,
- estimate the matrix coefficients $[A_{i,j}^{tv}]$ and $[B_{i,j}^{tv}]$ for the user-defined model $n_D$, $n_N$ and $n_T$, in the preferred domain,
- construct and solve the polynomial eigenvalue problem :

$$\left( \sum_{i=0}^{n_{max}} \begin{bmatrix} A_i(t_1) , & -B_i(t_1) \\ A_i(t_2) , & -B_i(t_2) \\ & M \\ A_i(t_{N_l}) , & -B_i(t_{N_l}) \end{bmatrix} \lambda_m^i \right) \{\phi_m\} = 0$$

- the system poles and mode shapes are now found within the set of solutions of this polynomial eigenvalue problem
- to discriminate between physical and non-physical poles within the set of solutions one can use commonly used criteria such as for example : excessive damping ratios (e.g. $\xi > 10\%$), unstable poles ($\xi \le 0$) and pure mathematical poles.

In some applications additional information is available about the system under test. This prior knowledge can often be translated into equations $( L(\Omega) = \sum_{i=0}^{n_L} L_i \Omega^i )$ that can be added to $[\Upsilon(\Omega)]$. The eigenvalue problem then becomes :

$$\left( \sum_{i=0}^{n_{max}} \begin{bmatrix} C_{i1} \\ C_{i2} \\ \vdots \\ C_{iN_l} \\ L_i \end{bmatrix} \lambda_m^i \right) \{\phi_m\} = 0$$

The prior knowledge fulfils the role of an additional loading condition and can therefore be used to reduce the number of loading conditions in a complete set. In an ideal case a complete set, i.e. only the true modal parameters solve the equation above, can be achieved based purely on prior knowledge and the matrix coefficients associated with a single loading condition.

$$\left( \sum_{i=0}^{n_{max}} \begin{bmatrix} C_{i1} \\ L_i \end{bmatrix} \lambda_m^i \right) \{\phi_m\} = 0$$

Examples of such prior knowledge are : the matrix polynomial models built using previous observations multiplied with a forgetting factor to track the modal parameters of a time-varying system or a matrix polynomial model derived from prior numerical simulations of the system under test.

The number of required loading conditions can also be reduced when some modal parameters are known a priori. In a long-term modal parameter monitoring campaign the mode shapes often can be assumed constant over time and known from an earlier analysis or from numerical models of the system under test. The asssociated system poles however, vary over time and are constantly estimated. Assuming that all modes of interest have known mode shape vectors $\{\phi_m\}$, the associated system poles $\lambda_m$ remain unknown and form the parameters of interest. The obtained polynomial eigenvalue problem reduces to :

$$\left( \sum_{i=0}^{n_{max}} \begin{bmatrix} C_{i1} \\ C_{i2} \\ \vdots \\ C_{iN_l} \end{bmatrix} \lambda_m^i \right) \{\phi_{m,known}\} = 0$$

To solve the preceding polynomial eigenvalue problem often less loading conditions are required to find the system poles associated with the known mode shape vectors. In an ideal scenario only a single loading condition is required to obtain these system poles. This can be understood as follows : by assuming some mode shape vectors as being known the number of unknowns has been reduced. Therefore, the number of independent equations necessary to solve for the remaining unknowns is reduced, and hence less loading conditions are required. Note that this approach only allows estimating the system poles associated with known mode shape vectors. Therefore the system poles associated with unknown mode shape vectors remain unknown.

A third approach to reduce the number of required loading conditions based on prior knowledge is by altering the eigenvalue problem itself to include this prior knowledge. For instance when the system under test is assumed to have real-modes $\{\phi_m\} \in \Re^{N_o \times 1}$, the polynomial eigenvalue problem can be altered to include this assumption as:

$$\left( \sum_{i=0}^{n_{max}} \begin{bmatrix} real\left( \begin{bmatrix} C_{i1} \\ C_{i2} \\ \vdots \\ C_{iN_l} \end{bmatrix} \lambda_m^i \right) \\ imag\left( \begin{bmatrix} C_{i1} \\ C_{i2} \\ \vdots \\ C_{iN_l} \end{bmatrix} \lambda_m^i \right) \end{bmatrix} \right) \{\phi_m\} = 0$$

in which *real(X)* and *imag(X),* respectively, indicate taking the real and imaginary parts of the variable X. Other possible modifications can be based on prior knowledge on the general shape of the mode shapes for instance when it is assumed that some modeshapes can be modelled by certain shape functions, i.e $\{\phi_m\} = \{\phi(\alpha_m)\}$, with $\{\phi(\alpha_m)\}$ a generic shape function in the unknown variables $\alpha_m$.

$$\left( \sum_{i=0}^{n_{max}} \begin{bmatrix} C_{i1} \\ C_{i2} \\ \vdots \\ C_{iN_l} \end{bmatrix} \lambda_m^i \right) \{\phi(\alpha_m)\} = 0$$

By assuming that the mode shape can be modelled based on these generic shape functions, the number of unknowns can be reduced from the number of measured outputs to the number of considered variables $\alpha_m$. The goal of such an approach is again to reduce the number of unknowns in the polynomial eigenvalue problem, therefore reducing the number of required equations and consequently a reduction in the number of required loading conditions. In an ideal case only a single loading condition is required. Such an approach is able to identify these modal parameters for which the mode shapes comply with the set shape functions.

The step of adding prior knowledge can be summarized as

- obtain the system response as in $N_o$ output signals, in which $N_o$ exceeds the number of uncorrelated inputs exciting the structure, for instance by using a set of $N_o$ vibrational sensors, of the system excited by unknown inputs,
- (optional) process the data in such a manner that the influence of measurement noise and leakage can be reduced, using the commonly known methodologies,
- select the number of rows of the matrix coefficients $[C_i]$ and estimate the matrix coefficients $[C_i]$, for the user-defined model orders $n_c$, in the preferred domain,
- repeat the previous steps for $N_l$ loading conditions,
- construct the combined matrix $[\Upsilon(\Omega)]$ :

$$[\Upsilon(\Omega)] = \left( \sum_{i=0}^{n_c} \begin{bmatrix} C_{i1} \\ C_{i2} \\ \vdots \\ C_{iN_l} \end{bmatrix} \Omega_m^i \right)$$

- include prior knowledge into the polynomial eigenvalue problem by adding equations and/or considering some modal parameters as known and/or slightly changing the polynomial eigenvalue problem itself,
- solve the altered (extended) polynomial eigenvalue problem,
- the system poles and mode shapes are now found within the set of solutions of the altered/extended polynomial eigenvalue problem. If the polynomial eigenvalue remains ill-conditioned, the analyst should include more prior knowledge into the polynomial eigenvalue problem or consider additional loading conditions,
- to discriminate between physical and non-physical poles within the set of solutions one can use commonly used criteria such as for example : excessive damping ratios (e.g. $\xi > 10\%$), unstable poles ($\xi \leq 0$) and pure mathematical poles.

To illustrate the performance of the method according to this invention a series of simulations using a simple mass dampener spring model, as depicted in Fig.3 is performed. The resonant frequencies and damping ratios are shown in the following table :

| No. | $f_{res}(Hz)$ | $\xi(\%)$ |
|---|---|---|
| 1 | 3.1105 | 0.4886 |
| 2 | 5.9163 | 0.9594 |
| 3 | 8.1428 | 1.2792 |
| 4 | 9.5721 | 1.5038 |

To illustrate the potential of the different techniques these series of discrete time domain simulations consist out of the measurement of the system responses to a leakage free input signal (i.e. a multisine), with similar properties to white noise. However, to illustrate the improved applicability of the method of this invention a colouring is added to the signal between the third and fourth mode, simulating the presence of a harmonic vibration source. Finally a small amount of additive measurement noise was added to increase the realistic character of the simulated results.

As a benchmark for comparison with existing techniques a cross power based approach using the Least Squares Complex Frequency (LSCF) estimator is used. As a benchmark for comparing with the existing scalar transmissibility function based approaches the pseudo-inverse approach is used.

As shown in Fig.3, a 4-DOF system was used to simulate a linear system and its responses to a series of input spectra $F(\omega)$. All degrees of freedom are considered as outputs, as if four vibrational sensors were placed on the four masses of the model. The number of outputs ($N_0$) is therefore equal to 4.

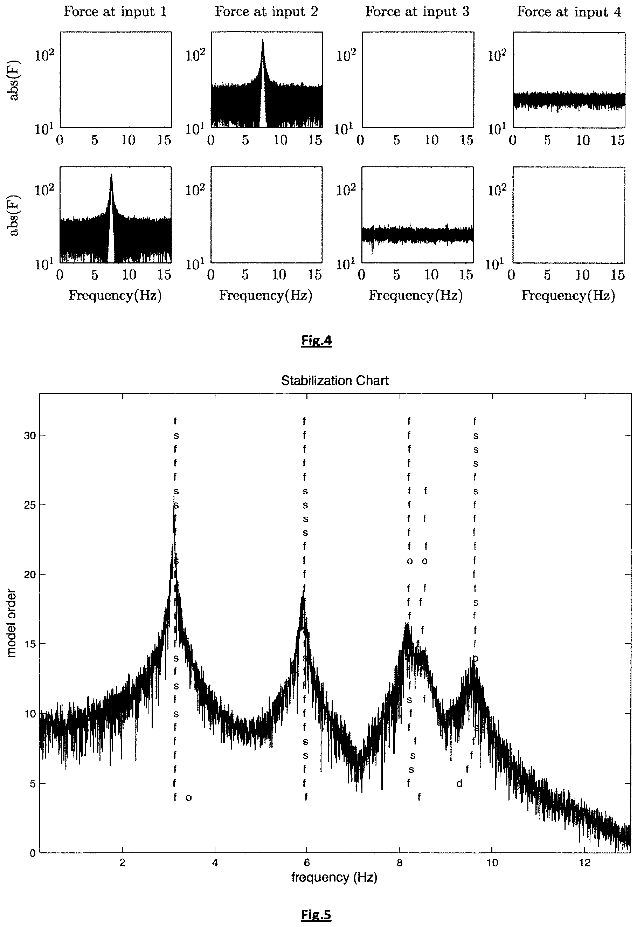

The simulation is performed as follows. Over two loading conditions the forces shift input location. During the first loading condition forces are applied on degrees of freedom 2 and 4. The force spectrum at DOF 4 ($F_4(\omega)$) is a full-bandwidth multisine, the input at DOF 2 $(F_2(\omega))$ is contaminated with a coloring at 8.6Hz, in between the 3rd and 4th mode, the remaining force spectra ($F_1(\omega)$ and $F_3(\omega)$) are considered negligible compared to the two dominant input spectra. In a second loading condition the forces change input locations and now a broadband spectrum is applied on DOF 3, and the colored input is applied at DOF 1. Again the remaining force inputs are considered negligible compared to the two dominant inputs. The input spectra for these two loading conditions are also illustrated in Fig.4.

The system response spectra can be processed into auto and cross power spectra. These power spectra are averaged over the two loading conditions, this to provide the same amount of information within the cross power approach as is available for the newly developed method. In Fig.4 the stabilization diagram is given for the OMA approach using the power spectra and applying the Least Squares Complex Frequency (LSCF) estimator upon this data.

A stabilization diagram (Fig.5) is a method for discriminating mathematical poles (numerically unstable : o,d,f) from physical poles (numerically stable : s). A user is hence looking for's' indicators, preferably a line of subsequent instances of 's' indicating the presence of the pole in a wide span of model orders. In Fig.5 it is clear where the poles are located, since there are clear lines of pole indicators linked to the peaks of the background image, this is the absolute value of a cross power. However, these lines are not completely stable and are dominated by instances of 'f'. However since in every line there is at least one 's' present a relatively good estimation is possible. However the presence of the input coloring in the vicinity of the third and fourth mode influences the damping estimation of these modes in a negative manner. This can be confirmed by looking at the table below.

| No. | $f_{res}(Hz)$ | $\xi(\%)$ |
|---|---|---|
| 1 | 3.1116 | 0.3423 |
| 2 | 5.9084 | 0.5138 |
| 3 | 8.1698 | 0.1410 |
| 4 | 9.5824 | 0.1150 |

Moreover the coloring is incorrectly interpreted as a possible pole, as there is a line of pole indicators above the peak caused by the coloring of the input spectrum.

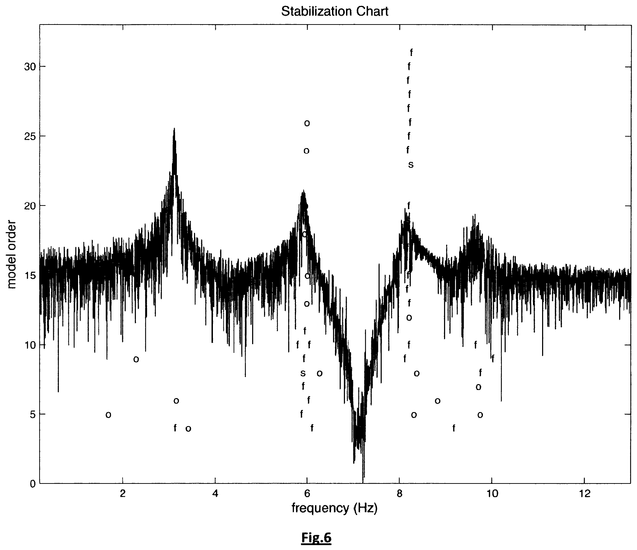

In the past the scalar transmissibility function was often suggested to resolve the influence of the input coloring. However, since in this case there are multiple uncorrelated forces exciting the structure at any given instance, scalar transmissibility functions cannot be used without further preprocessing. This of course requires an increased amount of required data. To illustrate this, a stabilization diagram (Fig.6) was constructed using an advanced pseudo-inverse approach. It is clear that without further data the scalar transmissibility functions are of limited use to solve the problem at hand.

An illustration of the multi-reference transmissibility approach is now provided. As a first illustration the algorithm for the multi-reference transmissibility approach using a linearized Least Squares estimator, implemented in the Z-domain will be given. For example the following base function can be used:

$$z(\omega) = exp\left(\frac{j*(\omega - \omega_1)}{\omega_{N_f} - 2\omega_1 + \omega_2}\right) \qquad (31)$$

with $\llcorner\omega_1, \omega_{Nf}\lrcorner$ the (pulsation) band of interest and $\Delta\omega$ the resolution within the band of interest. Of course several other possibilities exist and this is merely one illustration. After retrieving and preprocessing the response data the obtained response spectra $\{X(\omega)\}$ can be used in the observation matrix:

$$[K_d, K_n]\{\Theta\} = 0 \qquad (32)$$

with :

$$K_d = \begin{bmatrix} X_l^T(\omega_1) & z(\omega_1)^{-1} X_l^T(\omega_1) & z(\omega_1)^{-2} X_l^T(\omega_1) & \cdots & z(\omega_1)^{-n_D} X_l^T(\omega_1) \\ X_l^T(\omega_2) & z(\omega_2)^{-1} X_l^T(\omega_2) & z(\omega_2)^{-2} X_l^T(\omega_2) & \cdots & z(\omega_2)^{-n_D} X_l^T(\omega_2) \\ \vdots & \vdots & \vdots & & \vdots \\ X_l^T(\omega_{N_f}) & z(\omega_{N_f})^{-1} X_l^T(\omega_{N_f}) & z(\omega_{N_f})^{-2} X_l^T(\omega_{N_f}) & \cdots & z(\omega_{N_f})^{-n_D} X_l^T(\omega_{N_f}) \end{bmatrix} \qquad (33)$$

$$K_n = -\begin{bmatrix} X_r^T(\omega_1) & z(\omega_1)^{-1} X_r^T(\omega_1) & z(\omega_1)^{-2} X_r^T(\omega_1) & \cdots & z(\omega_1)^{-n_N} X_r^T(\omega_1) \\ X_r^T(\omega_2) & z(\omega_2)^{-1} X_r^T(\omega_2) & z(\omega_2)^{-2} X_r^T(\omega_2) & \cdots & z(\omega_2)^{-n_N} X_r^T(\omega_2) \\ \vdots & \vdots & \vdots & & \vdots \\ X_r^T(\omega_{N_f}) & z(\omega_{N_f})^{-1} X_r^T(\omega_{N_f}) & z(\omega_{N_f})^{-2} X_r^T(\omega_{N_f}) & \cdots & z(\omega_{N_f})^{-n_N} X_r^T(\omega_{N_f}) \end{bmatrix} \qquad (34)$$

wherein $X_r(\omega)$ are the $N_r$ reference responses. Considering the injected input in the system (two uncorrelated input spectra) $N_r$ was set equal to two. The third and last responses in the response vector were chosen to serve as references :

$$\Theta = \begin{Bmatrix} A_0^T \\ A_1^T \\ \vdots \\ A_{n_D}^T \\ B_0^T \\ B_1^T \\ \vdots \\ B_{n_N}^T \end{Bmatrix} \qquad (35)$$

In order to be able to estimate the coefficients $[A_i],[B_i]$ it is necessary to apply a constraint on the coefficients to be estimated. In this example $A_{n_D}$ is set to be a $(N_o - N_r) \times (N_o - N_r)$ identity matrix. The matrix coefficients are then found by :

$$\Theta_{LS} = [K]^+ b \qquad (36)$$

with $b$ the negative of the $(n_D+1)^{th}$ column of $[K_d,K_n]$ and $[K]$ is $[K_d,K_n]$ in which the $(n_D + 1)^{th}$ column has been removed and wherein the operator $[K]^+$ denotes the Moore Penrose pseudoinverse of $[K]$. From $\Theta_{LS}$ the matrix coefficients are found for the first loading condition. This is repeated for the second loading condition and from the combination in $[\Upsilon(\Omega)]$ the modal parameters can be obtained from the polynomial eigenvalue problem as described in (24). One should note that the obtained system poles are positioned within the Z-domain.

In order to discriminate between physical and non-physical poles, one can rely on the aforementioned criteria and/or on the construction of a stabilization diagram. This is done by obtaining the matrix coefficients for different model orders in this case from 3 to 32. Physical poles will manifest as stable over the different model orders while mathematical poles will in general differ for each model order. Stabilization charts are commonly used to visualize the stability over different model orders and are user friendly tools to select physical poles.

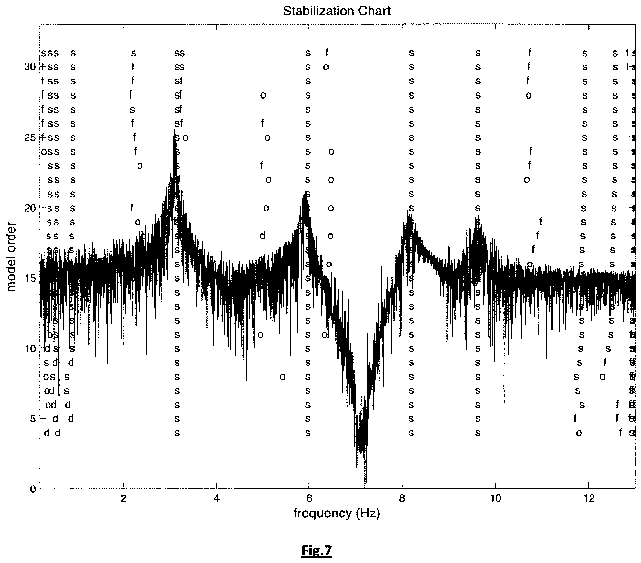

Using the same data as in the benchmark tests the stabilization chart in Fig.7 was obtained using the inventive method herein introduced. It is immediately clear that now long stable lines are present within the stabilization chart, making pole selection straightforward. However, there are also stable lines present at the borders of the frequency band of interest. This is typical for the proposed method, these lines are however easily recognized as mathematical by comparing with the background image (pseudo-inverse of the transmissibility matrix) that clearly doesn't yield peaks at the border lines. The poles obtained using this method are given in table below and confirm the small error of the resulting system poles compared to the real system poles.

| No. | $f_{res}(Hz)$ | $\xi(\%)$ |
|---|---|---|
| 1 | 3.1104 | 0.4853 |
| 2 | 5.9165 | 0.9258 |
| 3 | 8.1429 | 1.2789 |
| 4 | 9.5737 | 1.5364 |

To asses whether the new method also yields correct mode shapes, the Modal Assurance Criteria (MAC) can be used to compare the estimated mode shapes with the exact system modes. In essence, the co-linearity of the estimated mode shapes with the exact mode shapes is quantified, ranging from 1, an exact correlation, to 0, perfectly orthogonal. An ideal result would therefore be an identity matrix with ones on the main diagonal and zeros elsewhere. The results for the newly developed method are given in the following table and approximate this ideal situation very well.

EP 2 870 450 B1

| | | Exact modes | | | |
|---|---|---|---|---|---|
| | | **mode 1** | **mode 2** | **mode 3** | **mode 4** |
| Estimated modes | **mode 1** | 1 | 6.9316e-10 | 1.4579e-10 | 1.9263e-10 |
| | **mode 2** | 1.0945e-07 | 1 | 1.4297e-08 | 2.1507e-08 |
| | **mode 3** | 1.4313e-08 | 1.0367e-08 | 1 | 1.1508e-07 |
| | **mode 4** | 5.3936e-07 | 3.974e-07 | 1.81e-06 | 1 |

To illustrate the reference-less approach a Total Least Squares approach is used based on the discrete time domain data. Using the discrete time domain data makes it unnecessary to transform the measurement data in the frequency domain by means of a Fourier Transform, typically conducted using the Fast Fourier transform (FFT) algorithm.

Once the discrete time domain response data $\{x(u)\} \in \Re^{N_o \times 1}$ for $N_p$ time instances, is preprocessed to the liking of the users, it can directly be fed into the following observation matrix without the need to define any references.

$$K = \begin{bmatrix} x^T(N_c) & x^T(N_c-1) & x^T(N_c-2) & \cdots & x^T(0) \\ x^T(N_c+1) & x^T(N_c) & x^T(N_c-1) & \cdots & x^T(1) \\ \vdots & \vdots & \vdots & & \vdots \\ x^T(N_p) & x^T(N_p-1) & x^T(N_p-2) & \cdots & x^T(N_p-N_c) \end{bmatrix} \qquad (37)$$

According to the TLS approach for obtaining the matrix coefficients it is sufficient to calculate the singular value decomposition of the observation matrix and retaining $V_2$, i.e. the last 2 $(= N_o\text{-}N_{forces})$ columns of the matrix $V = [V_1, V_2]$ and with $N_{forces}$ the number of uncorrelated forces acting on the system.

$$svd(K) = U\Sigma[V_1, V_2]^H \qquad (38)$$

With

$$\Theta_{TLS} = V_2 = \begin{Bmatrix} C_0^T \\ C_1^T \\ \vdots \\ C_{N_c}^T \end{Bmatrix} \qquad (39)$$

The matrix coefficients have to be estimated for the two different loading conditions and the two sets of coefficients can then be combined into one larger polynomial expression. The solution of the polynomial eigenvalue problem results, as described above, in a set of eigenvalues and eigenvectors containing amongst others the system poles and mode shape vectors. To further discriminate between mathematical poles and real physical poles the aforementioned criteria and /or the construction of a stabilization chart can be used.

One of the major advantages of using (discrete) time domain data lies in the easy updating of the observation matrix, and possibilities of fast online preprocessing by, for instance, using different filters. The use of the (discrete) time domain is to be expected within the online monitoring of modal parameters to asses structural integrity and expected lifetime.

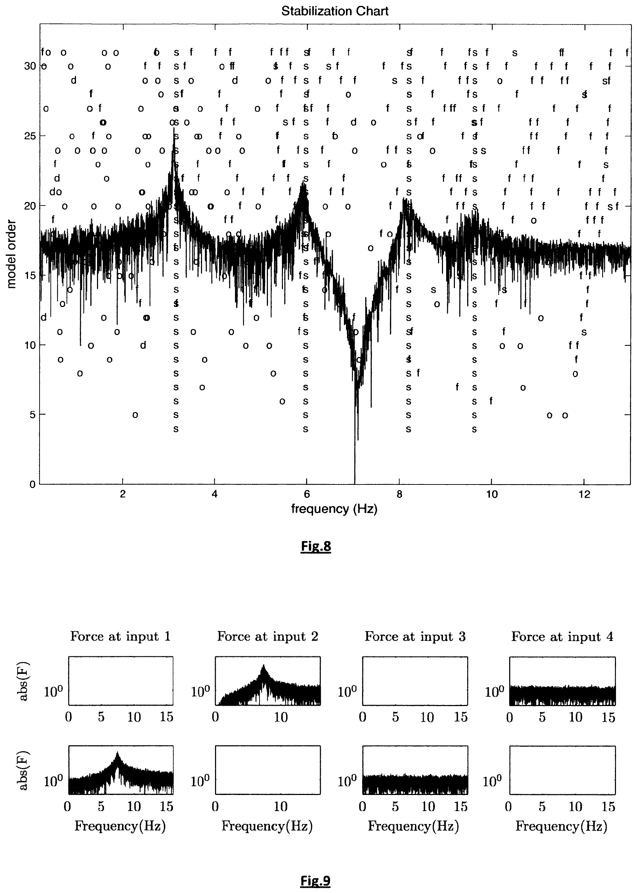

Using the same data as in the benchmark tests the stabilization chart in Fig.8 was obtained using the inventive reference-less method herein introduced. One can clearly see that while the stabilization diagram contains more non-stable poles the real physical poles clearly manifest as stable poles from a very low model order. These long lines of stable poles indicate high quality results which is confirmed by looking at the obtained damping and resonance frequencies :

| No. | $f_{res}(Hz)$ | $\xi(\%)$ |
|-----|---------------|-----------|
| 1   | 3.1105        | 0.4886    |
| 2   | 5.9163        | 0.9293    |
| 3   | 8.1428        | 1.2792    |
| 4   | 9.5721        | 1.5041    |

The results are almost identical to the true system values. Also the obtained mode shapes correlate very well to the true mode shapes :

|                 |        | Exact modes | | | |
|-----------------|--------|-------------|-----------|-----------|-----------|
|                 |        | **mode 1**  | **mode 2** | **mode 3** | **mode 4** |
| Estimated modes | **mode 1** | 1 | 1.885e-13 | 4.8805e-13 | 8.75e-14 |
|                 | **mode 2** | 1.1345e-11 | 1 | 3.3742e-12 | 2.8994e-12 |
|                 | **mode 3** | 1.2457e-10 | 5.0725e-11 | 1 | 6.8749e-10 |
|                 | **mode 4** | 1.9564e-10 | 4.0789e-10 | 6.4031e-10 | 1 |

The leakage free input is now replaced by broad-spectrum white noise, so leakage errors are present. A comparison will be made between the multireference transmissibility approach and the leakage compensated reference less approach.

To illustrate the leakage compensated approach again a Z-domain implementation of the Total Least Squares estimator is used. After preprocessing of the response data, without a need for windowing, the Fast Fourier Transform of the system response data can be fed directly into the following observation matrix:

$$K = \begin{bmatrix} \tilde{X}^T(\omega_1) & z(\omega_1)^{-1}\tilde{X}^T(\omega_1) & z(\omega_1)^{-2}\tilde{X}^T(\omega_1) & \cdots & z(\omega_1)^{-n_C}\tilde{X}^T(\omega_1) \\ \tilde{X}^T(\omega_2) & z(\omega_2)^{-1}\tilde{X}^T(\omega_2) & z(\omega_2)^{-2}\tilde{X}^T(\omega_2) & \cdots & z(\omega_2)^{-n_C}\tilde{X}^T(\omega_2) \\ \vdots & \vdots & \vdots & & \vdots \\ \tilde{X}^T(\omega_{N_f}) & z(\omega_{N_f})^{-1}\tilde{X}^T(\omega_{N_f}) & z(\omega_{N_f})^{-2}\tilde{X}^T(\omega_{N_f}) & \cdots & z(\omega_{N_f})^{-n_C}\tilde{X}^T(\omega_{N_f}) \end{bmatrix} \quad (40)$$

in which

$$\tilde{X}(\omega) = \begin{Bmatrix} X(\omega) \\ 1 \end{Bmatrix} \quad (41)$$

Again by taking the singular value decomposition of the observation matrix $K$ and retaining the 2 (= $N_o$-$N_{forces}$) last columns of the matrix $V$, the matrix coefficients are obtained:

$$\Theta_{TLS} = \left\{ \begin{array}{c} \tilde{C}_0^T \\ \tilde{C}_1^T \\ \vdots \\ \tilde{C}_{n_C}^T \end{array} \right\} \qquad (42)$$

Since the *1* was added as the $(N_0+1)$=5th element of the response vector it is necessary to remove the fifth column of the matrix coefficients $[\tilde{C}_i]$ in order to obtain the leakage compensated matrix coefficients $[C_i]$. These steps have to be performed for the two available loading conditions, after which the two sets of matrix coefficients can be combined and the polynomial eigenvalue problem can be solved to retrieve a set of eigenvalues and eigenvectors which contains the system poles and mode shapes. To discriminate in this set between mathematical and physical poles one can again rely on the discrimination criteria and stabilization charts.

As already said before the leakage free multisine signals have been replaced by broadspectrum noise. To further illustrate the power of the methods of this invention again some amount of coloring was added around 8.6Hz, in a similar way as was injected in the benchmark tests. This results in the input spectra given in Fig. 9.

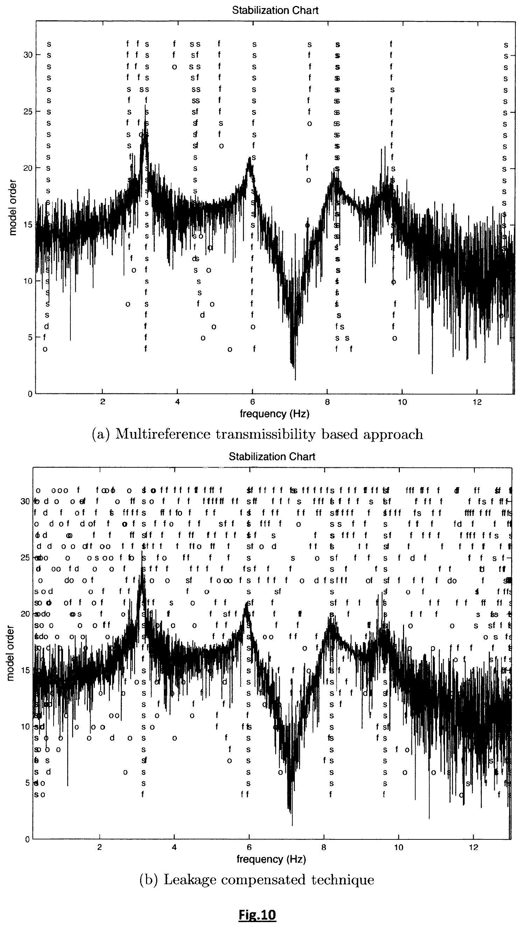

To illustrate the influence of leakage, consider the stabilization diagram in Fig.10a obtained by using the multireference approach and compare it to the stabilization chart obtained using the leakage compensated approach, Fig. 10b. While it is obvious that the stabilization diagram of the multireference approach is much clearer, there is no detection of the fourth mode, moreover as one can clearly see in the table below the errors on the estimates obtained with the multi reference approach are considerably larger then these obtained with the leakage compensated technique.

| No. | $f_{res}(Hz)$ | $\xi(\%)$ | $f_{res}(Hz)$ | $\xi(\%)$ |
|---|---|---|---|---|
| 1 | 3.1129 | 0.3855 | 3.1104 | 0.4762 |
| 2 | 5.9782 | 0.9580 | 5.9163 | 0.9259 |
| 3 | 8.1913 | 11.5372 | 8.1419 | 1.2783 |
| 4 | 9.6712 | 0.1628 | 9.5715 | 1.5407 |

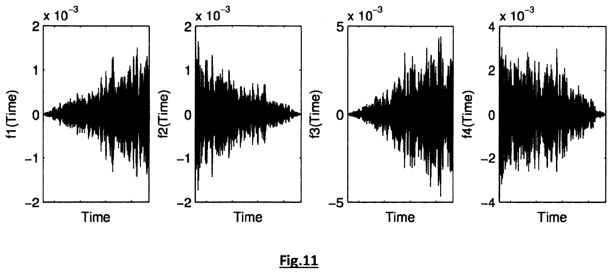

In a next example continuously varying loading conditions are considered on the 4-DOF system presented in Fig.3. In the simulation the system is excited at DOFs 2 and 4 by two non-white and uncorrelated input forces ($N_i$ = 2), these two forces gradually shift to DOFs 1 and 3, as illustrated in Fig. 11. The figure illustrates a continuous varying loading condition for which two forces act firstly on DOFs 2 and 4 (respectively $f_2$ and $f_4$) and gradually shift to degrees of freedom 1 and 3 ($f_1$ and $f_3$). Because only two input sources are present in the data, two references are sufficient for the proposed technique. In the system response to these inputs, an infinite number of loading conditions are present. However, each loading condition only exists instantaneously. In this scenario it is best to use the time-varying implementation of the proposed method. In this example DOFs 1 and 2 were set as non-reference signals, the DOFs 3 and 4 were set as reference responses. All results are provided for $n_N = n_D = 8$ and $n_T = 1$ and the method was implemented in the Z-domain. Two loading conditions were required to solve this problem, in this simulation the instantaneous transmissibilities associated with the first and last data point were used to solve the polynomial eigenvalue problem. The following system poles were identified

| No. | $f_{res}(Hz)$ | $\xi(\%)$ |
|---|---|---|
| 1 | 3.1101 | 0.4557 |
| 2 | 5.9145 | 0.9221 |
| 3 | 8.1425 | 1.2753 |
| 4 | 9.5717 | 1.5110 |

Similar to the previous algorithm MAC values comparing the estimated mode shapes to the exact mode shapes can be calculated.

| | | Exact modes | | | |
|---|---|---|---|---|---|
| | | **mode 1** | **mode 2** | **mode 3** | **mode 4** |
| Estimated modes | **mode 1** | 1 | 2.5188e-7 | 2.3349e-8 | 3.1554e-9 |
| | **mode 2** | 7.0781e-7 | 1 | 4.2914e-8 | 1.0157e-9 |
| | **mode 3** | 1.1307e-7 | 4.9875e-8 | 1 | 1.0689e-7 |
| | **mode 4** | 4.4270e-7 | 1.7013e-8 | 3.1203e-8 | 1 |

In a further example the 4-DOF system presented in Fig. 3 is considered, but for illustration purposes the damping of the model is set to zero (i.e. c = 0). The system is excited by two uncorrelated forces acting in DOFs 1 and 4. This loading condition requires two references to achieve a full input spectrum independency. For this loading condition the matrix coefficients (with two references) are estimated and the polynomial eigenvalue problem is constructed as :

$$\sum_{i=0}^{n_{max}} [A_i, -B_i] \lambda_m^i \{\phi_m\} = 0$$

The equation above yields an infinite number of solutions. In this example the system mode shapes, $\phi_m$, are considered to be known for instance from a preceding analysis or numerical simulation. This knowledge significantly reduces the number of unknowns in the eigenvalue problem :

$$\sum_{i=0}^{n_{max}} [A_i, -B_i] \lambda_m^i \{\phi_{m,known}\} = 0$$

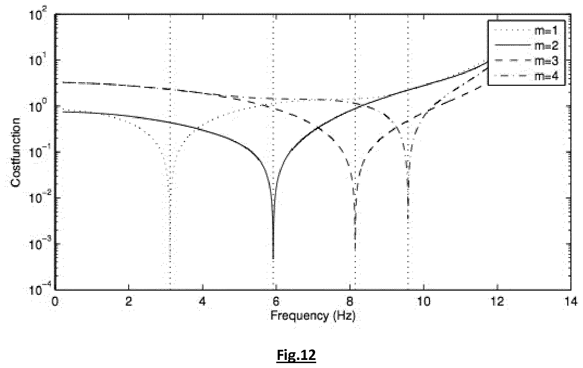

as the only remaining unknowns are the system poles. The system poles $\lambda_m$ are found as the solution of (2). This can for instance be done by solving an optimization problem with a cost function that minimizes the norm of $\sum_{i=0}^{n_{max}} [A_i, -B_i] \lambda_m^i \{\phi_{m,known}\}$. In Fig.12 is shown that this cost-function becomes zero in $\Omega = \lambda_m$. This property allows identifying a unique solution for the unknown system pole. This analysis is performed for each mode individually. In essence if one mode shape is known, it is possible to retrieve the system pole (damping and resonance frequency) associated with that particular mode shape.

A single processor or other unit may fulfil the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

**Claims**

1.   Method for determining modal parameters of a system under test by using only output signals, comprising the steps of

- taking a first set of values of at least three output signals obtained under a first loading condition of said system, **characterized by** comprising the steps of:

- determining for said first loading condition a parametric matrix model for said system, said parametric matrix model representing a space orthogonal to the space spanned by said output signals, said space being at least two dimensions smaller than the number of output signals, so that the influence of input spectra is reduced,

- determining for said first loading condition, parameters of said parametric matrix model,
- expressing a polynomial eigenvalue problem based on said parametric matrix model and the corresponding parameters for said first loading condition,
- deriving additional information about said system under test by considering a second set of values of said output signals obtained under a second loading condition of said system and determining for said second loading condition a parametric matrix model and its parameters, or by considering prior knowledge about characteristics of said system under test,
- adapting said polynomial eigenvalue problem using said additional information, until a complete set of equations is obtained,
- obtaining said modal parameters by solving said adapted polynomial eigenvalue problem.

2. Method for determining modal parameters as in claim 1, wherein said parametric matrix model has a number of rows not exceeding the difference between the number of said output signals and the number of uncorrelated inputs acting on said system during loading.

3. Method for determining modal parameters as in claim 1 or 2, wherein said parametric matrix model is obtained from a matrix polynomial representation of a multivariable transmissibility function.

4. Method for determining modal parameters as in claim 3, wherein the step of determining said parameters comprises estimating coefficients of said matrix polynomials.

5. Method for determining modal parameters as in any of claims 3 or 4, comprising a step of selecting among said output signals a number of reference signals for said multivariable transmissibility function, said number being equal to or exceeding the number of uncorrelated inputs acting on said system during loading.

6. Method for determining modal parameters as in claim 1 or 2, wherein said parametric matrix model is represented by a single matrix polynomial and wherein said step of determining parameters comprises estimating coefficients of said single matrix polynomial.

7. Method for determining modal parameters as in any of the previous claims, wherein said parametric matrix model is time-varying.

8. Method for determining modal parameters as in any of the previous claims, wherein the method steps are performed repetitively in order to allow for tracking of said modal parameters.

9. Method for determining modal parameters as in any of the previous claims, wherein said prior knowledge is derived from earlier measurements of said system under test or from numerical simulations.

10. Method for determining modal parameters as in claim 7, wherein said step of discriminating comprises construction of a stabilization diagram to evaluate the numerical stability of the obtained modal parameters.

11. Method for determining modal parameters as in any of the previous claims, whereby in the step of determining parameters a transient term is taken into account, said transient term reflecting a transient excitation and/or reducing a leakage error.

12. Method for determining modal parameters as in any of the previous claims, wherein more than two sets of values of output signals are taken, obtained under more than two different loading conditions.

13. Method for determining modal parameters as in any of the previous claims, comprising a step of measuring said output signals with vibration sensitive sensors.

14. A program, executable on a programmable device containing instructions, which when executed, perform the method as in any of the claims 1 to 13.

15. Data carrier comprising a program as in claim 14.

**Patentansprüche**

1. Verfahren zum Bestimmen von Modalparametern eines zu testenden Systems unter alleiniger Verwendung von Ausgangssignalen, umfassend die Schritte des

   - Annehmens eines ersten Satzes von Werten von mindestens drei Ausgangssignalen, die in einem ersten Ladezustand des Systems erhalten werden, **dadurch gekennzeichnet, dass** es die Schritte umfasst des:
   - Bestimmens für den ersten Ladezustand eines parametrischen Matrixmodells für das System, wobei das parametrische Matrixmodell einen Raum orthogonal zum Raum, der durch die Ausgangssignale aufgespannt wird, darstellt, wobei der Raum mindestens zwei Größen kleiner ist als die Anzahl von Ausgangssignalen, sodass der Einfluss von Eingangsspektren sich verringert,
   - Bestimmens von Parametern des parametrischen Matrixmodells für den ersten Ladezustand,
   - Wiedergebens eines polynomialen Eigenwertproblems basierend auf dem parametrischen Matrixmodell und den entsprechenden Parametern für den ersten Ladezustand,
   - Ableitens zusätzlicher Informationen über das zu testende System durch Inbetrachtziehen eines zweiten Satzes von Werten der Ausgangssignale, die in einem zweiten Ladezustand des Systems erhalten werden, und Bestimmens für den zweiten Ladezustand eines parametrischen Matrixmodells und seiner Parameter, oder durch Inbetrachtziehen von Vorkenntnissen über Eigenschaften des zu testenden Systems,
   - Anpassens des polynomialen Eigenwertproblems unter Verwendung der zusätzlichen Informationen bis ein vollständiger Satz von Gleichungen erhalten wird,
   - Erhaltens der Modalparameter durch Lösen des angepassten polynomialen Eigenwertproblems.

2. Verfahren zum Bestimmen von Modalparametern nach Anspruch 1, wobei das parametrische Matrixmodell eine Anzahl von Reihen aufweist, die die Differenz zwischen der Anzahl der Ausgangssignale und der Anzahl von unkorrelierten Eingängen, die während des Ladens auf das System einwirken, nicht überschreitet.

3. Verfahren zum Bestimmen von Modalparametern nach Anspruch 1 oder 2, wobei das parametrische Matrixmodell aus einer Matrixpolynomdarstellung einer multivariablen Übertragbarkeitsfunktion erhalten wird.

4. Verfahren zum Bestimmen von Modalparametern nach Anspruch 3, wobei der Schritt des Bestimmens der Parameter ein Einschätzen von Koeffizienten der Matrixpolynome umfasst.

5. Verfahren zum Bestimmen von Modalparametern nach einem der Ansprüche 3 oder 4, umfassend einen Schritt eines Auswählens unter den Ausgangssignalen einer Anzahl von Referenzsignalen für die multivariable Übertragbarkeitsfunktion, wobei die Anzahl gleich der Anzahl von unkorrelierten Eingängen ist, die während des Ladens auf das System einwirken, oder diese überschreitet.

6. Verfahren zum Bestimmen von Modalparametern nach Anspruch 1 oder 2, wobei das parametrische Matrixmodell durch ein einziges Matrixpolynom dargestellt wird und wobei der Schritt des Bestimmens von Parametern ein Einschätzen von Koeffizienten des einzigen Matrixpolynoms umfasst.

7. Verfahren zum Bestimmen von Modalparametern nach einem der vorstehenden Ansprüche, wobei das parametrische Matrixmodell zeitvariabel ist.

8. Verfahren zum Bestimmen von Modalparametern nach einem der vorstehenden Ansprüche, wobei die Verfahrensschritte wiederholend durchgeführt werden, um ein Folgen der Modalparameter zu ermöglichen.

9. Verfahren zum Bestimmen von Modalparametern nach einem der vorstehenden Ansprüche, wobei die Vorkenntnisse von früheren Messungen des zu testenden Systems oder von numerischen Simulationen abgeleitet werden.

10. Verfahren zum Bestimmen von Modalparametern nach Anspruch 7, wobei der Schritt des Unterscheidens eine Erstellung eines Stabilisierungsdiagramms umfasst, um die numerische Stabilität der erhaltenen Modalparameter zu bewerten.

11. Verfahren zum Bestimmen von Modalparametern nach einem der vorstehenden Ansprüche, wobei beim Schritt des Bestimmens von Parametern eine Übergangsbedingung berücksichtigt wird, wobei die Übergangsbedingung eine Übergangsanregung wiederspiegelt und/oder einen Leckagefehler verringert.

**12.** Verfahren zum Bestimmen von Modalparametern nach einem der vorstehenden Ansprüche, wobei mehr als zwei Sätze von Werten von Ausgangssignalen angenommen werden, die in mehr als zwei unterschiedlichen Ladezuständen erhalten werden.

**13.** Verfahren zum Bestimmen von Modalparametern nach einem der vorstehenden Ansprüche, umfassend einen Schritt eines Messens der Ausgangssignale mit schwingungsempfindlichen Sensoren.

**14.** Programm, ausführbar auf einer programmierbaren Vorrichtung, die Anweisungen enthält, das, wenn es ausgeführt wird, das Verfahren nach einem der Ansprüche 1 bis 13 durchführt.

**15.** Datenträger, umfassend ein Programm nach Anspruch 14.


**Revendications**

**1.** Procédé permettant de déterminer les paramètres modaux d'un système soumis à essai en utilisant seulement des signaux de sortie, comprenant les étapes consistant à

- utiliser un premier ensemble de valeurs d'au moins trois signaux de sortie obtenu dans une première condition de charge dudit système, **caractérisé en ce qu'**il comprend les étapes consistant à :
- déterminer, pour ladite première condition de charge, un modèle de matrice paramétrique dudit système, ledit modèle de matrice paramétrique représentant un espace orthogonal à l'espace parcouru par lesdits signaux de sortie, ledit espace étant inférieur d'au moins deux dimensions au nombre de signaux de sortie, de sorte que l'influence des spectres d'entrée est réduite,
- déterminer, pour ladite première condition de charge, des paramètres dudit modèle de matrice paramétrique,
- exprimer un problème de valeur propre polynomiale à partir dudit modèle de matrice paramétrique et des paramètres correspondants pour ladite première condition de charge,
- recueillir des informations supplémentaires concernant ledit système soumis à essai par considération d'un second ensemble de valeurs desdits signaux de sortie obtenues dans une seconde condition de charge dudit système et déterminer, pour ladite seconde condition de charge, un modèle de matrice paramétrique et ses paramètres, ou par considération de connaissances préalables sur les caractéristiques dudit système soumis à essai,
- adapter ledit problème de valeur propre polynomiale au moyen desdites informations supplémentaires, jusqu'à obtention d'un ensemble complet d'équations,
- obtenir lesdits paramètres modaux par résolution dudit problème de valeur propre polynomiale.

**2.** Procédé de détermination des paramètres modaux selon la revendication 1, dans lequel ledit modèle de matrice paramétrique possède un nombre de lignes inférieur ou égal à la différence entre le nombre desdits signaux de sortie et le nombre d'entrées non corrélées agissant sur ledit système durant la charge.

**3.** Procédé de détermination des paramètres modaux selon la revendication 1 ou 2, dans lequel ledit modèle de matrice paramétrique est obtenu à partir d'une représentation de polynôme matriciel d'une fonction de transmissibilité à variables multiples.

**4.** Procédé de détermination des paramètres modaux selon la revendication 3, dans lequel l'étape de détermination desdits paramètres comprend l'estimation de coefficients desdits polynômes matriciels.

**5.** Procédé de détermination des paramètres modaux selon l'une quelconque des revendications 3 ou 4, comprenant une étape de sélection, parmi lesdits signaux de sortie, d'un nombre de signaux de référence pour ladite fonction de transmissibilité à variables multiples, ledit nombre étant égal ou supérieur au nombre d'entrées non corrélées agissant sur ledit système durant la charge.

**6.** Procédé de détermination des paramètres modaux selon la revendication 1 ou 2, dans lequel ledit modèle de matrice paramétrique est représenté par un polynôme matriciel unique et dans lequel ladite étape de détermination des paramètres comprend l'estimation de coefficients dudit polynôme matriciel unique.

**7.** Procédé de détermination des paramètres modaux selon l'une quelconque des revendications précédentes, dans lequel ledit modèle de matrice paramétrique varie dans le temps.

**8.** Procédé de détermination des paramètres modaux selon l'une quelconque des revendications précédentes, dans lequel les étapes du procédé sont effectuées de manière répétitive afin de permettre le suivi desdits paramètres modaux.

**9.** Procédé de détermination des paramètres modaux selon l'une quelconque des revendications précédentes, dans lequel lesdites connaissances préalables proviennent de mesures antérieures dudit système soumis à essai ou de simulations numériques.

**10.** Procédé de détermination des paramètres modaux selon la revendication 7, dans lequel ladite étape de différenciation comprend la construction d'un diagramme de stabilisation pour évaluer la stabilité numérique des paramètres modaux obtenus.

**11.** Procédé de détermination des paramètres modaux selon l'une quelconque des revendications précédentes, dans lequel à l'étape de détermination des paramètres, un terme transitoire est pris en compte, ledit terme transitoire indiquant une excitation transitoire et/ou réduisant une erreur de fuite.

**12.** Procédé de détermination des paramètres modaux selon l'une quelconque des revendications précédentes, dans lequel plus de deux ensembles de valeurs de signaux de sortie sont utilisés, obtenus dans plus de deux conditions de charge différentes.

**13.** Procédé de détermination des paramètres modaux selon l'une quelconque des revendications précédentes, comprenant une étape de mesure desdits signaux de sortie avec des capteurs sensibles aux vibrations.

**14.** Programme, exécutable sur un dispositif programmable contenant des instructions qui, lorsqu'elles sont exécutées, mettent en oeuvre le procédé selon l'une quelconque des revendications 1 à 13.

**15.** Support de données comprenant un programme selon la revendication 14.

(a) Scalar Transmissibilty functions        (b) Multivariable Transmissibilty functions

**Fig.1**

$$(a) \ \Omega \neq \lambda_m \qquad\qquad (b) \ \Omega = \lambda_m$$

**Fig.2**

**Fig.3**

Force at input 1 Force at input 2 Force at input 3 Force at input 4

**Fig.4**

Stabilization Chart

**Fig.5**

Fig.6

Fig.7

Fig.8

Fig.9

(a) Multireference transmissibility based approach

(b) Leakage compensated technique

**Fig.10**

**Fig.11**

**Fig.12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1250579 A
- WO 2008002310 A
- EP 2390644 A
- US 5327358 A
- WO 2012061431 A

### Non-patent literature cited in the description

- **B. PEETERS et al.** Reference-based stochastic subspace identification for output-only modal analysis. *Mechanical Systems and Signal Processing,* 1999, vol. 13 (6), 855-878
- **P. GUILLAUME et al.** An operational modal analysis approach based on parametrically identified multivariable transmissibilities. *Proceedings of IOMAC,* 2007
- **W.J. YAN et al.** Operational Modal Parameter Identification from Power Spectrum Density Transmissibility. *Computer-Aided Civil and Infrastructure Engineering,* March 2012, vol. 27 (3), 202-217
- **LATAIRE J. et al.** Frequency-domain weighted non-linear least-squares estimation of continuous-time, time-varying systems. *IET Control Theory & Applications,* 2011, vol. 5 (7), 923-933